Europäisches Patentamt

European Patent Office

Office européen des brevets

(19)

(11) **EP 1 619 805 A1**

(12) **EUROPEAN PATENT APPLICATION**

(43) Date of publication:
**25.01.2006 Bulletin 2006/04**

(51) Int Cl.:
**H04B 1/30** (2006.01)

(21) Application number: **04017399.9**

(22) Date of filing: **22.07.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (71) Applicant: **SIEMENS AKTIENGESELLSCHAFT**<br>**80333 München (DE)**<br><br>(72) Inventor: **Thomsen, Pia**<br>**9440 Aabybro (DK)** |

(54) **A device for calibrating a direct conversion receiver**

(57) A device (115) for calibrating a direct conversion receiver (100; 200) or means for receiving signal from a direct conversion receiver comprises:

- a) means (301) for receiving an in-phase component (I) and an in-quadrature component (Q) from a direct conversion receiver (100; 200) and for converting them to at least one digital signal (DI, DQ);
- b) means (303) for generating a calibration signal (CS) responsive to the digital signal (DI, DQ); and
- c1) output means (303) for outputting said calibration signal (CS) to the direct conversion receiver (100; 200) for trimming an in-phase mixer (111), or an in-quadrature mixer (113); or
- c2) adjusting means (303), responsive to said calibration signal (CS), adapted:

  - to calibrate the means (301) for receiving the in-phase component (I) or the in-quadrature component (Q) from the direct conversion receiver (100; 200); or
  - to adjust digital compensation means (305) of the device (115), preferably by changing digital correction values ($C_I$ and $C_Q$; DI -> CI; DQ -> CQ).

FIG 1

## Description

### Field of the invention

The invention relates to devices suitable for calibrating a direct conversion receiver or a means for receiving a signal from a direct conversion receiver.

### Background of the invention

Direct conversion receivers are widely used especially in different devices for cellular communications and in devices for wireless local area networks, sometimes referred to WLAN or with specifications belonging to 802.11 -series.

A direct conversion receiver requires low in-band noise, high linearity and accurate quadrature matching. Furthermore, the frequency response between the in-phase I and in-quadrature Q components should be as large as possible. The difference between I and Q components should ideally be 90° and the gain offset should be zero dB.

Because these requirements are very difficult to reach with a reasonable cost, receiver manufacturers have been forced to select non-optimal solutions. The effect of impairments has been minimized by very carefully designing especially the receiver mixer. With a very careful layout of balanced circuits, the impairments can be minimized.

Possible gain and phase offsets can be found supplying an external calibration signal in the production. Following the measurement a compensation value can then be found by means of digital signal processing. This must normally be done at least once for each radio frequency band. This is time-consuming and slows down the manufacturing process.

The operating characteristics of a direct conversion receiver may change due to aging and temperature. For some applications currently under development, especially for Enhanced Data Rates for GSM Evolution EDGE, wherein non-constant envelope modulation is used, in order to achieve higher data rates, resulting I and Q impairments are particularly harmful.

### Summary of the invention

A first objective of the invention is to enable a simpler and cheaper design and manufacture of a direct conversion receiver, especially by reducing need for production tests, and to enable overcoming changing of circuit parameters due to e.g. temperature or aging. This objective can be achieved as set out in claim 1.

A second objective of the invention is to improve the performance of a direct conversion receiver comprising a mixer fulfilling less strict requirements. This objective can be achieved as set out in claim 2. Dependent claim 3 describes an advantageous embodiment to this aspect of the invention.

A third objective of the invention is to improve bit-error ratio in reception by a device suitable for use in a network. This objective can be achieved as set out in claim 4. Dependent claims 5 to 10 describe various advantageous embodiments to this aspect of the invention.

### Advantages of the invention

By using means for calibrating a direct conversion receiver or means for receiving a signal from a direct conversion receiver, the design and manufacture of the direct conversion receiver does not need to be that precise any more, because imprecise operation can be corrected to up to some point, thereby reducing the effort and manufacturing cost.

A direct conversion receiver according to the invention may enable fulfilling bit-error ratio requirements using a mixer fulfilling less strict performance requirements. Furthermore, I and Q impairments can be minimized. This can be done without using an external calibration signal, because the direct conversion receiver is capable of calibrating itself.

If a direct conversion receiver comprises at least two direct conversion receivers and thus also two separation means, the effort saving in the design and manufacture can be at least doubled.

If a device suitable for use in a network comprises at least one direct conversion receiver according to the invention, such a device will be less complex to design.

If the device is furthermore adapted to calibrate one or more direct conversion receivers in an event-driven manner, the versatility of the calibrating function can be enhanced. Especially advantageous is if the device is adapted to perform calibration in response to receiving a command from the network or from other devices, or after detecting that the bit-error ratio has decreased. Similar advantage applies when the calibration is performed at least at predefined intervals or e.g. by power-on of the device or when the device is entering a specific mode.

### List of Figures

In the following, the invention is described in more detail with references to the examples shown in the accompanying drawings in Figures 1 to 6, of which:

Figure 1 is a simplified block diagram of a device comprising a direct conversion receiver;

Figure 2 is a simplified block diagram of a device comprising two direct conversion receivers;

Figure 3 is a simplified block diagram of a device for calibrating a direct conversion receiver;

Figure 4 is a flow chart showing some steps possible for calibrating a direct conversion receiver;

Figure 5 shows a device in communication with a network; and

Figure 6 illustrates sample pairs collected for some time for digital DI and DQ signal resulting from a sine signal as test signal TS.

Same reference numerals refer to similar structural elements throughout the Figures.

## Detailed description

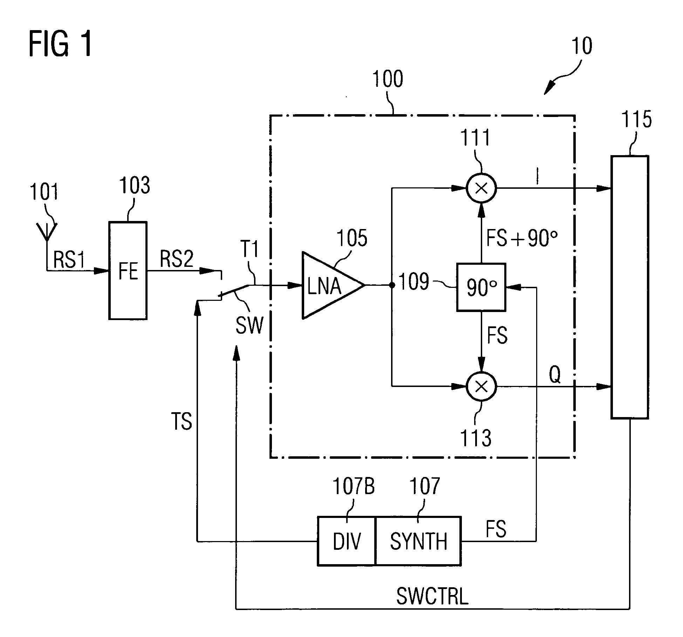

Figure 1 is a simplified block diagram of a device 10 comprising a direct conversion receiver 100. The direct conversion receiver 100 is adapted to receive at its input T1 a signal RS2 from front end 103 which further receives a signal RS1 from antenna 101. Received signal RS2 is received at the direct conversion receiver 100 at input T1, after which it is amplified in low noise amplifier LNA 105. The amplified signal is then fed to separating means comprising a first mixer 111 and a second mixer 113, and a phase shifting means 109. Phase shifter 109 feeds a frequency signal FS to one mixer 111 and also shifted with 90° to the other mixer 113. The first mixer 111 produces an in-phase component I, and the second mixer produces an in-quadrature component Q. Direct conversion receivers are as such well known so for brevity the more detailed discussion can here be omitted without making it more difficult for the skilled person to understand the invention.

The frequency signal FS is usually generated in a frequency signal generating means 107, such as in a frequency synthesizer. The frequency signal generating means 107 can be included in the direct conversion receiver 100 or in the device 10.

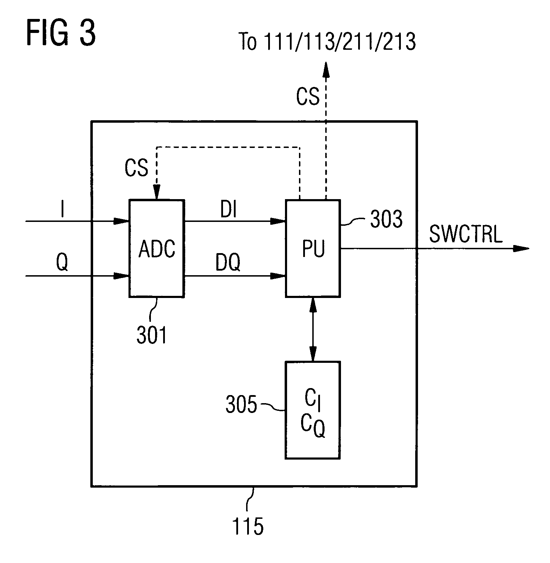

The resulting in-phase component I and in-quadrature component Q are usually fed from the receiver 100 to a signal processing unit 115. The signal processing unit 115, in more detail shown in Figure 3, converts the in-phase component I and in-quadrature component Q to at least one digital signal and then performs symbol recognition etc. on the digital signal.

According to a first aspect of the invention, the direct conversion receiver 100 is operated by feeding a test signal TS, for example by changing a position of switch SW that can be controlled by the signal processing unit 115 by sending a control signal SWCTRL. The test signal TS is preferably generated by using the frequency signal generating means 107, wherefrom it is passed through a frequency divider 107B. In this manner, to the direct conversion receiver 100 receives the test signal TS instead of the received signal RS2. The switch SW can be located before the direct conversion receiver 100 or in the direct conversion receiver 100 between low noise amplifier 105 and mixers 111, 113.

Furthermore, the signal processing unit 115 is then used in order to calibrate the direct conversion receiver 100 or means for receiving signal from a direct conversion receiver.

Figure 3 shows a simplified block diagram of the signal processing unit 115. The signal processing unit 115 comprises means for receiving an in-phase component I and an in-quadrature component Q from a direct conversion receiver 100. Furthermore, the signal processing unit 115 comprises analog-to-digital converting means 301, such as an analog-to-digital converter ADC, for converting said in-phase component I and said in-quadrature component Q to at least one digital signal. In the example of Figure 3 the two digital signals have been denoted DI and DQ, respectively.

The signal processing unit 115 further comprises means 303, such as a microprocessor, for generating a calibration signal CS responsive to the at least digital signal DI, DQ.

The signal processing unit 115 may further comprise output means for outputting said calibration signal CS to the direct conversion receiver 100 for trimming an in-phase mixer 111 or an in-quadrature mixer 113. As an alternative or in addition to this, the signal processing unit 115 may comprise adjusting means, responsive to said calibration signal CS, adapted to: i) calibrate the means 301, e.g. Analog-to-Digital Converter ADC, for receiving the in-phase component I or the in-quadrature component Q from the direct conversion receiver 100, or ii) adjust digital compensation means 305 of the signal processing unit 115. The latter corresponds to compensating digital received signal DI, DQ with estimated impairments, or in other words to digital compensation.

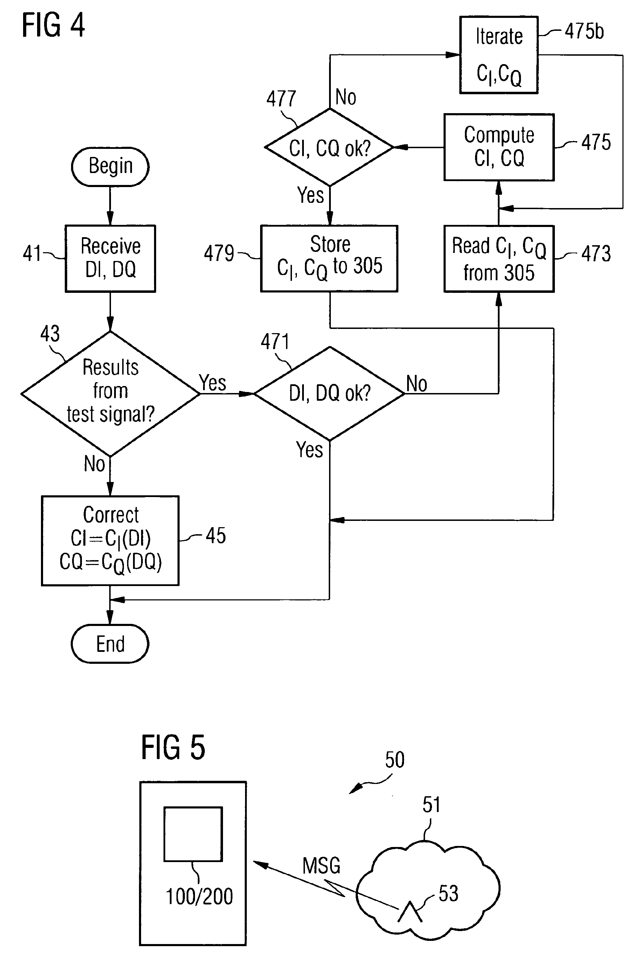

In other words, according to one aspect of the invention, the processing unit 303 receives the at least one digital signal DI, DQ from the at least one ADC 301. The processing unit 303 has access to digital compensation means 305 for performing digital compensation. The components in the digital signal DI, DQ are interpreted with help of the digital compensation means 305. This is described below with reference to Figure 4.

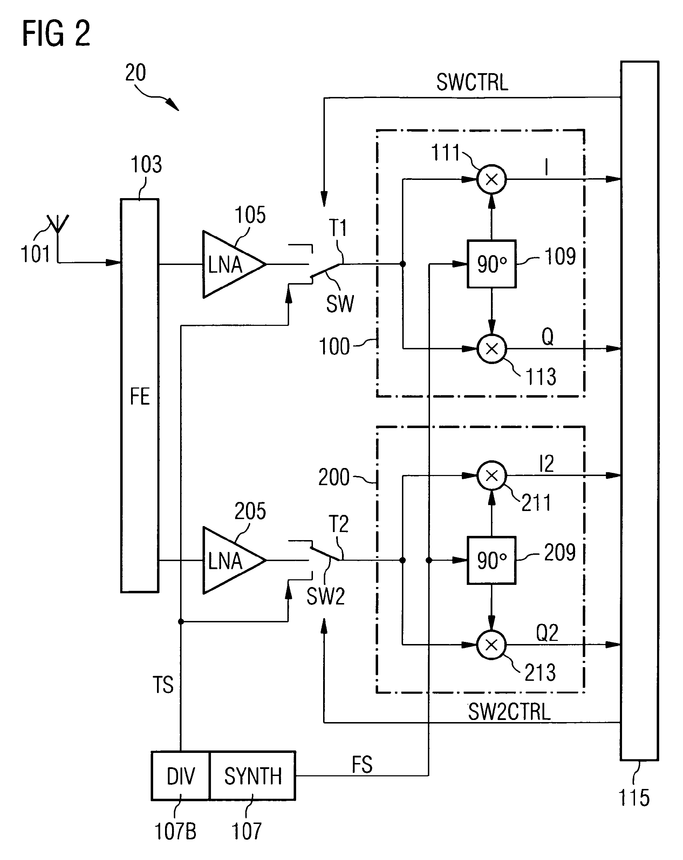

Figure 2 is a simplified block diagram of a device 20 very similar to device 10 in Figure 1. The device 20 now comprises a further direct conversion receiver 200, a further switch SW2 and frequency division means 107B, such as a frequency divider.

In other words, the direct conversion receiver 200 comprises second separating means, comprising a phase shifter 209, a first mixer 211, and a second mixer 213, for separating a test signal TS into an in-phase component I and into an in-quadrature component Q.

The output means 303 of the signal processing unit 115 may be adapted to selectively calibrate the separating means or the second separating means.

It is also possible that the device 20 comprises more than two direct conversion receivers. In this case, the signal processing unit 115 may be adapted to selectively calibrate any of the direct conversion receivers, or means for receiving signal from the direct conversion receiver (e.g. ADC) or digital compensation means.

In addition to this or as an alternative, the direct conversion receiver 200 may be adapted to: selectively calibrate the separating means or the second separating means in response to receiving said calibration signal CS.

In addition to this or as an alternative, the adjusting means 303 may be adapted i) to selectively calibrate the means 301 for receiving the in-phase component I or the in-quadrature component Q from the direct conversion receiver 200, or ii) to selectively to selectively adjust digital compensation means 305 of the device 115.

Figure 4 is a flow chart showing some steps possible for calibrating a direct conversion receiver 100 or 200. The steps shown in Figure 4 are preferably performed at the processing unit 303.

After receiving the at least one digital signal DI, DQ at step 41, the processing unit 303 checks in step 43 whether the digital signal DI, DQ is for test signal TS.

If it is not for test signal TS but for a received signal RS2, the digital signal DI, DQ is digitally compensated in step 45.

The digital in-phase component DI is corrected to a corrected in-phase signal CI using correction function $C_I$; $CI = C_I$ (DI) stored in digital compensation means 305.

In a similar manner, the digital in-quadrature component DQ is corrected to a corrected in-quadrature signal CQ using correction function $C_Q$; $CQ = C_Q$ (DQ) stored in digital compensation means 305. These corrected signals CI and CQ now replace the digital received signal DI and DQ in further signal processing in the processing unit 115 or in the device 10 or 20.

If the digital signal DI, DQ results from test signal TS, some values of the digital signal DI, DQ are checked in step 471.

If the values are acceptable, i.e. the I and Q impairments are within predefined limits, the calibration of the direct conversion receiver 100 or 200 is OK.

If the values are not acceptable, i.e. the I and Q impairments are not within predefined limits, the calibration of the direct conversion receiver 100 or 200 is not OK. Therefore some calibration is necessary.

Here one possibility is discussed in more detail, namely calibration by adjusting digital compensation means 305 in the signal processing unit 115. As suggested by the dashed lines in Figure 3, the calibration can be made also by calibrating the ADC 301, or by feeding the calibration signal CS to any one of the direct conversion receivers 100, 200. In the latter case, it is most probably one or more of the mixers 111, 113, or 211, 213 that need to be calibrated. For practical reasons, only one direct conversion receiver 100, 200 is calibrated at a time. The selection of the principle in which this is done does not have any remarkable effect in the results but any choice will do.

If the gain of both mixers 111, 113 (or 211, 213) of a direct conversion receiver 100 (or 200) is same for in-phase component I than for in-quadrature component Q, for a test signal TS having a shape of a perfect sine wave, then

$$I = A \sin \omega t + \phi_1;$$

and

$$Q = A \sin (\omega t + \pi/2) + \phi_1.$$

Therefore, if the ADC 301 works properly, a perfect circle would result in I-Q space. The shape of the resulting shape nevertheless tends to deform to an eclipse because of gain offset. The ellipse if further rotated because of possible phase offset. DC offset furthermore moves the resulting rotated ellipse in relation to origin.

In step 473, digital compensation functions $C_I$, $C_Q$ are read from the digital compensation means 305, after which in step 475 corrected values CI, CQ are computed. In step 477 it is checked whether the corrected values CI, CQ are within predefined limits. If they are within predefined limits, their value may in step 479 be updated into digital compensation means 305. If in step 477 it was noted that the corrected values CI, CQ are not within the predefined limits, the original digital compensation functions $C_I$, $C_Q$ can be used as the starting point for the iteration of a new digital compensation function $C_I$, $C_Q$. The iteration can be performed in step 475B, results from which are tested in step 477 after computing new corrected values CI and CQ.

The iteration in step 475B can be performed e.g. by making a best fit to the ellipse coming out of the measurement by estimating A, $\omega$ and $\phi$. Because $\omega$ is known assuming that the frequency signal generation means 107 or frequency dividing means 107B are stable, it is enough to iterate for A and $\phi$.

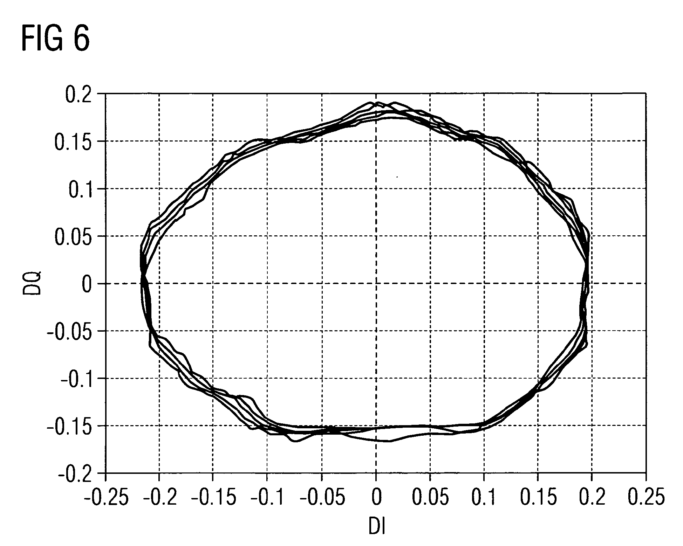

Figure 6 illustrates sample pairs collected for some time for digital DI and DQ signal resulting from a sine signal as test signal TS. DI is on the horizontal axis and DQ is on the vertical axis. From this example, a phase error of 0.4881 degrees and an amplitude error of 1.7979 can be detected.

When these values have been found, the digital compensation functions $C_I$, $C_Q$ which can be determined on basis of A and $\phi$ are stored to the digital compensation means 305 thereby adjusting the digital compensation means 305.

With selectively adjusting the digital compensation means 305 it is meant with reference to this embodiment that there are dedicated digital compensation means 305 for each digital compensation functions $C_I$, $C_Q$ of the first direct conversion receiver 100 and of the second direct conversion receiver 200. An example of the digital compensation means 305 is a digital equalizer.

In a similar manner, with selectively calibrating the first or second separating means it is meant with reference to other embodiments that both direct conversion receivers 100, 200 or respective receive paths (e.g. ADC 301) are calibrated separately, i.e. independently of each other.

Figure 5 shows a mobile terminal 50, basically comprising similar components as device 10 or 20, in communication with a base station 53, the mobile terminal 50 further comprising a direct conversion receiver 100 or 200 and further signal processing unit 115. Also the base station 53 may comprise a direct conversion receiver 100 or 200 and further signal processing unit 115.

The mobile terminal 50 or the base station 53 may further comprise a frequency synthesizer 107 adapted to generate a frequency signal FS to the separating means 109, 111, 113 and/or to the second separating means 209, 211, 213, and to generate test signal TS. The mobile terminal 50 or the base station may furthermore comprise all other means as the device 10 or 20 of Figures 1 and 2, respectively, comprises.

The mobile terminal 50 or the base station 53 may be adapted to calibrate the direct conversion receiver 100 or 200 in response to an event in the device. Said event can be that the device has received a command message MSG from a network 51 or from another device, e.g. from a base station 53 or from a mobile terminal 50. Said even can be that the device detects that bit-error-ratio in communication from network 51 or from other device, such as from the base station 53 or from the mobile terminal 50 has increased over a predefined threshold, or that a predefined time since last calibration has elapsed, or a change in temperature, or if a special mode is selected. Especially, the special mode can be EGPRS (Enhanced GPRS). Since EGPRS covers different Modulation and Coding Schemes MCS 1 to 9, from which only the higher data rate schemes MCS 5 to 9 use 8PSK modulation. These MCS 5 to 9 schemes are more sensitive for I and Q impairments.

Therefore, a specific example of such a mode is any one of EGPRS MCS 5 to 9 where 8PSK modulation is used.

Mobile terminal 50 may comprise means for performing cellular phone functionalities, and therefore be adapted to operate on at least one cellular radio frequency band, such as GSM 900 (EGSM) or GSM 1800 MHz (PCN) band, or on two or more cellular radio frequency bands. Said mobile terminal 50 may be a WLAN device, such as a network card comprising a direct conversion receiver, in this manner forming only a part of the terminal.

In other words, the device 10 or 20, mobile terminal 50, or base station 53 can be adapted to make an internal calibration of the in-phase component I and in-quadrature component Q gain and phase by inserting an internally generated signal before or after the LNA 105 (or 205) by e.g. dividing a frequency signal FS from a local oscillator 107 using a frequency dividing means 107B.

The test signal TS can be fed to the direct conversion receiver 100 or 200 by adding it before or after the LNA 105 (or 205) by means of a switch SW (or SW2). The separating means (109, 111, 113 or 209, 211, 213) can generate a suitable baseband signal within the bandwidth of the receiver and use a simple mixer circuit, e.g. a transistor, to add this test signal TS to the frequency signal FS. The level of the signal should be some dB lower than the 1 dB compression point at the input in order not to distort the signal.

By using the invention, the effect of impairments can be reduced. The circuit enables calibration in various operating temperatures, aging, or operating modes, etc., as chosen by the implementation and without the need for any production tests.

The inserted test signal TS may be e.g. 100 kHz above or below the centre frequency of the frequency signal FS and the I and Q signal resulting from the test signal TS will then be in the bandwidth of the direct conversion receiver 100 or 200.

The skilled person appreciates that even though the invention was described in more detail by the way of some examples, the invention is not limited to them, but can be varied in many different ways within the scope or the spirit of the patent claims.

**Claims**

1. A device (115) for calibrating a direct conversion receiver (100; 200) or means for receiving signal from a direct conversion receiver, comprising:

   - a) means (301) for receiving an in-phase component (I) and an in-quadrature component (Q) from a direct conversion receiver (100; 200) and for converting them to at least one digital signal (DI, DQ);
   - b) means (303) for generating a calibration signal (CS) responsive to the digital signal (DI, DQ); and
   - c1) output means (303) for outputting said calibration signal (CS) to the direct conversion receiver (100; 200) for trimming an in-phase mixer (111), or an in-quadrature mixer (113); or
   - c2) adjusting means (303), responsive to said calibration signal (CS), adapted:

     - to calibrate the means (301) for receiving the in-phase component (I) or the in-quadrature component (Q) from the direct conversion receiver (100; 200); or
     - to adjust digital compensation means (305) of the device (115), preferably by changing digital correction values ($C_I$ and $C_Q$; DI -> CI; DQ -> CQ).

2. A direct conversion receiver (100; 200), comprising:

- d) means (T1, SW) for receiving a test signal (TS), controllably by a device (115) according to claim 1;
- e) separating means (109, 111, 113) for separating said test signal (TS) into an in-phase component (I) and into an in-quadrature component (Q); and
- a device (115) according to claim 1, adapted to calibrate the direct conversion receiver (100; 200) or means (115) for receiving signal from a direct conversion receiver.

3. A direct conversion receiver (200) according to claim 2, wherein:

- e2) the direct conversion receiver (100; 200) comprises second separating means (209, 211, 213) for separating said test signal (TS) into an in-phase component (I) and into an in-quadrature component (Q); and
- f1) the output means (303) are adapted to selectively calibrate the separating means (109, 111, 113) or second separating means (209, 211, 213), or
- f2) the direct conversion receiver (100; 200) is adapted to selectively calibrate the separating means (109, 111, 113) or the second separating means (209, 211, 213) in response to receiving said calibration signal (CS), or
- f3) the adjusting means (303) are adapted:

- to selectively calibrate the means (301) for receiving the in-phase component (I) or the in-quadrature component (Q) from the direct conversion receiver (100; 200); or
- to selectively digital compensation means (305) of the device (115), preferably by changing digital correction values ($C_1$ and $C_Q$; DI -> CI; DQ -> CQ).

4. A device (10; 20; 50; 53) suitable for use in a network (51) comprising: a direct conversion receiver (100; 200) according to preceding claim 2 or 3.

5. A device (10; 20; 50; 53) according to claim 4, further comprising:

- h) a frequency synthesizer (107) adapted to generate a frequency signal (FS) to the separating means (109, 111, 113) and/or to the second separating means (209, 211, 213), and to generate the test signal (TS).

6. A device (10; 20; 50; 53) according to claim 5, wherein: the device (10; 20; 50; 53) is adapted to generate the test signal (TS) by passing a frequency signal (FS) from the frequency synthesizer (107) through a frequency dividing means (107B).

7. A device (50; 53) according to claim 4, 5, or 6, wherein: said device (10; 20; 50; 53) is adapted to calibrate the direct conversion receiver (100; 200) in response to an event in the device (50; 53).

8. A device (50; 53) of claim 7, wherein: said event is that the device (50; 53) has received a command message (MSG) from a network (51) or from other device (53; 50), or that the device (50; 53) detects that bit-error-ratio in communication from network (51) or from other device (53; 50) has decreased below a predefined threshold, or that a predefined time since last calibration has elapsed, or that a temperature has changed, or that a special mode is selected in the device (50; 53).

9. A device (10; 20; 50; 53) according to any one of claims 4 to 8, wherein: said device (50, 53) is a mobile terminal or a base station, especially adapted to operate on a cellular radio frequency band, such as GSM 900 or GSM 1800 MHz band, or that said device (50) is a WLAN device.

10. A device (50) according to claim 8, wherein:

- said device (50) is a mobile terminal, especially adapted to operate on GSM 900 or GSM 1800 MHz band, whereas the other device (53) is a base station; or
- said device (53) is a base station, especially adapted to operate on GSM 900 or GSM 1800 MHz band, whereas the other device (50) is a mobile terminal.

11. A device according to any one of claims 8 to 10, wherein: said special mode corresponds to changing to any one of EGPRS MCS 5 to 9 modes, wherein 8PSK modulation would be used.

FIG 1

# FIG 2

# FIG 3

To 111/113/211/213

## FIG 4

Iterate $C_I, C_Q$ — 475b

477 — No

CI, CQ ok?

Compute CI, CQ — 475

Begin

Yes

41 — Receive DI, DQ

479 — Store $C_I$, $C_Q$ to 305

Read $C_I$, $C_Q$ from 305 — 473

43 — Results from test signal?

471

Yes — DI, DQ ok? — No

Correct
$CI = C_I(DI)$
$CQ = C_Q(DQ)$ — 45

No

Yes

End

## FIG 5

50

51

MSG

100/200

53

FIG 6

**European Patent Office**

## EUROPEAN SEARCH REPORT

Application Number

EP 04 01 7399

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 473 373 A (ROCKWELL INTERNATIONAL CORP) 4 March 1992 (1992-03-04)<br>* abstract; claim 8 * | 1-7 | H04B1/30 |
| X | US 6 535 560 B1 (MASENTEN WESLEY K) 18 March 2003 (2003-03-18)<br>* abstract; figures 1-4 *<br>* column 4, line 8 - column 6, line 25 * | 1-7 | |
| X | US 2003/223480 A1 (CAFARELLA JOHN H) 4 December 2003 (2003-12-04)<br>* abstract; claims 1,4,6; figure 2 * | 1-7 | |
| A | US 5 826 180 A (GOLAN MORDECHAY) 20 October 1998 (1998-10-20)<br>* abstract; claim 2; figure 3 * | 1-7 | |
| A | DE 195 31 998 A (SIEMENS AG) 6 March 1997 (1997-03-06)<br>* abstract; claims 1,2,4; figures 1,2 * | 1-7 | |
| A | US 2004/087279 A1 (PFLAUM BERND ET AL) 6 May 2004 (2004-05-06)<br>* page 8, paragraph 112 - paragraph 116; figures 1,3,16-18 * | 1-7 | TECHNICAL FIELDS SEARCHED (Int.Cl.7)<br><br>H04B<br>H03D |
| A | US 2003/174641 A1 (RAHMAN MAHIBUR) 18 September 2003 (2003-09-18)<br>* abstract; claims 1,3; figures 1-5 * | 1-7 | |

The present search report has been drawn up for all claims

| Place of search | Date of completion of the search | Examiner |
|---|---|---|
| Munich | 12 January 2005 | Kolbe, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

**ANNEX TO THE EUROPEAN SEARCH REPORT
ON EUROPEAN PATENT APPLICATION NO.**

EP 04 01 7399

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2005

| Patent document cited in search report | | Publication date | Patent family member(s) | | Publication date |
|---|---|---|---|---|---|
| EP 0473373 | A | 04-03-1992 | EP | 0473373 A2 | 04-03-1992 |
| US 6535560 | B1 | 18-03-2003 | US | 2003179836 A1 | 25-09-2003 |
| US 2003223480 | A1 | 04-12-2003 | NONE | | |
| US 5826180 | A | 20-10-1998 | NONE | | |
| DE 19531998 | A | 06-03-1997 | DE | 19531998 A1 | 06-03-1997 |
| US 2004087279 | A1 | 06-05-2004 | DE | 10114779 A1 | 24-10-2002 |
| | | | WO | 02078200 A2 | 03-10-2002 |
| | | | EP | 1374428 A2 | 02-01-2004 |
| | | | JP | 2004532551 T | 21-10-2004 |
| US 2003174641 | A1 | 18-09-2003 | NONE | | |

EPO FORM P0459

For more details about this annex : see Official Journal of the European Patent Office, No. 12/82